**Europäisches Patentamt**

**European Patent Office**

**Office européen des brevets**

(11) Veröffentlichungsnummer: **0 425 808 A1**

## (12) EUROPÄISCHE PATENTANMELDUNG

(21) Anmeldenummer: **90118095.0**

(22) Anmeldetag: **20.09.90**

(51) Int. Cl.5: **B01D 11/04**

(30) Priorität: **28.10.89 DE 3936031**

(43) Veröffentlichungstag der Anmeldung:
**08.05.91 Patentblatt 91/19**

(84) Benannte Vertragsstaaten:
**AT BE CH DE DK ES FR GB IT LI LU NL SE**

(71) Anmelder: **LUWAR S.R.L.**
**Via Matteotti 48/b**
**I-21020 Barasso (VA)(IT)**

(72) Erfinder: **Rosolia, Franco, Dr.**
**Via Matteotti 48/b**
**I-21020 Barasso (VA)(IT)**

(74) Vertreter: **Gudel, Diether, Dr. et al**
**Patentanwälte Dipl.-Ing. G. Dannenberg Dr.**
**P. Weinhold Dr. D. Gudel Dipl.-Ing. S.**
**Schubert Dr. P. Barz Grosse Eschenheimer**
**Strasse 39**
**W-6000 Frankfurt am Main 1(DE)**

(54) **Hochdruck-Extraktionsverfahren und -vorrichtung.**

(57) Beschrieben wird ein Hochdruck-Extraktionsverfahren und eine dazu geeignete Vorrichtung, wobei in einem Hochdruckmischer für die Ausgangssubstanz und das Lösemittel die Mischung mit hohem Druckverlust und bei im wesentlichen laminarer Strömung gemischt wird und der Mischer hintereinander mehrere Mischstufen aufweist, in denen das Gemisch in immer feinere Tröpfchen verteilt und mit dem Lösemittel nach Art einer Dispersion gemischt wird. Das Lösemittel wird in diesen Stufen der Mischung über getrennte Leitungen zugeführt.

EP 0 425 808 A1

## HOCHDRUCK-EXTRAKTIONSVERFAHREN UND -VORRICHTUNG

Die Erfindung betrifft ein Verfahren und eine Vorrichtung zum kontinuierlichen Trennen einer Ausgangssubstanz in ein Raffinat und in ein Extrakt mit Hilfe eines Hochdruck-Extraktionsverfahrens, wobei die Ausgangssubstanz in einen Hochdruckmischer geleitet wird, in dem sie mit einem in überkritischen Zustand befindlichen Lösemittel in innigen Kontakt gebracht wird und gemischt wird derart, daß eine Mischung aus dem Raffinat, dem Extrakt und ggf. aus überschüssigem Lösemittel in einen dem Mischer nachgeschalteten Hochdruck-Separator geleitet wird, in dem das Raffinat aus dem Gemisch abgetrennt und gewonnen wird und aus dem das restliche Gemisch in einen Trennbehälter geleitet wird, in dem es in das Extrakt und das Lösemittel getrennt wird und aus dem das Extrakt und das Lösemittel gewonnen werden.

Unter dem Raffinat werden die im Lösemittel nicht gelösten Substanzen verstanden und unter dem Extrakt versteht man die aus dem Lösemittel gelösten Substanzen.

Die erfindungsgemäße Vorrichtung und das erfindungsgemäße Verfahren sind insbesondere zum Trennen von Rohlecithin in Reinlecithin und Öl geeignet und zwar vorzugweise mit Hilfe von Kohlendioxid als Lösemittel.

Die vorstehend beschriebenen Merkmale finden üblicherweise beim sogenannten Hochdruck-Extraktionsverfahren Anwendung. Vergleiche hierzu auch "Brockhaus", Naturwissenschaften und Technik, 1983, Band 2, S. 71.

Zum Stand der Technik wird auch hingewiesen auf die deutsche Offenlegungsschrift 33 29 249, die ein Verfahren und eine Vorrichtung zum Trennen von Rohlecithin in Reinlecithin und Öl mit Hilfe von Kohlendioxid beschreibt, wobei ebenfalls das Hochdruck-Extraktionsverfahren Anwendung findet. Bei dieser deutschen Offenlegungsschrift besteht der Mischer aus einer Düse, durch die das Rohlecithin hindurchgeleitet wird, wobei das überkritische Kohlendioxid quer zum Düsenstrahl geleitet wird zwecks inniger Vermischung dieser beiden Substanzen. Die Mischung erfolgt hierbei also in turbulenter Strömung und das Rohlecithin wird fadenförmig in die Lösung gezogen und durch das überkritische Kohlendioxid in der turbulenten Strömung zerrissen. An diesem bekannten Mischer muß insbesondere bemängelt werden, daß er für ein derartiges Hochdruck-Extraktionsverfahren mit Drücken arbeiten muß, die für den industriellen Einsatz viel zu hoch sind. So ist es nicht bekannt geworden, daß eine nach diesem vorbeschriebenen Verfahren arbeitende Anlage in industriellem Maßstab zufriedenstellend arbeitet. Weiterhin muß dieses bekannte Verfahren mit sehr hohen Temperaturen arbeiten, was nicht nur Energie kostet, sondern beim Trennen zahlreicher Ausgangssubstanzen nachteilig ist, weil diese durch die hohen Temperaturen ggf. zersetzt werden.

Die DE-OS 30 11 185 beschreibt ein Verfahren und eine Vorrichtung zum chargenweisen Trennen von Rohlecithin in Reinlecithin und Öl mit Hilfe von Kohlendioxid als Lösemittel. Nähere Erläuterungen, wie der dortige Mischer ausgelegt ist bzw. die Mischung stattfindet, fehlen dort. Insbesondere ist der dort vorhandene Chargenbetrieb nachteilig, weil die Trennung mehrere Stunden benötigt. Nach einer gewissen Extraktionszeit bildet sich außerdem an dem noch vorhandenen, teilentölten Rohlecithin eine gummiartige Haut, die im weiteren Verfahrensablauf stört und die sich nur sehr schwer abbauen läßt.

Die Erfindung vermeidet diese Nachteile. Ihr liegt die Aufgabe zugrunde, ein Verfahren und eine Vorrichtung mit den eingangs genannten Merkmalen vorzuschlagen, mit denen eine Trennung der Ausgangssubstanz in das Raffinat und das Extrakt in industriellem Maßstab möglich ist.

Zur Lösung dieser Aufgabe ist die Erfindung dadurch gekennzeichnet, daß der Hochdruckmischer als statischer Mischer ausgebildet und so ausgelegt ist, daß er die ihm zugeführten Bestandteile mit hohem Druckverlust und bei im wesentlichen laminarer Strömugn mischt, wobei der Mischer in der Durchströmungsrichtung der Ausgangssubstanz hintereinander mehrere Mischstufen aufweist, in denen das Gemisch in immer feinere Tröpfchen zerteilt und mit dem Lösemittel nach Art einer Dispersion gemischt wird, wobei das frische Lösemittel zumindest einigen der Stufen des Mischers über getrennte Leitungen zugeführt wird.

Eine Beschädigung oder sogar Zerstörung der Substanzen im Hochdruckmischer wird somit praktisch ausgeschlossen, weil dieser statisch ausgelegt ist und mit laminarer Strömung arbeitet. Die Ausgangssubstanz wird im Hochdruckmischer stufenweise nach und nach in immer kleinere Tröpfchen zerteilt. Bei einer Pilotanlage ergab sich eine Aufenthaltszeit für die Ausgangssubstanz im Mischer von maximal 120 Sek. bei einer Temperatur von ca. 60°C und einem Druck von ca. 500 bar. Die Reaktionsstrecke im erfindungsgemäßen Mischer ist zwar verhältnismäßig lang und die Reinheit des Produktes ist nicht extrem, aber immer noch voll ausreichend. In den einzelnen Stufen des Mischers erhält die Ausgangssubstanz somit eine immer größere Oberfläche zwecks Anlagerung und inniger Mischung mit dem Lösemittel, so daß sich insgesamt ein guter Wirkungsgrad der erfindungsgemäßen Anlage ergibt. Die Verteilung der Substanz in den einzelnen Stufen ist konstant und ermöglicht somit die Erzeugung eines Produkts mit gleichbleibenden und gleichmäßigen Eigenschaften. In wenigstens einigen der Mischstufen, vorzugsweise in allen Mischstufen mit Ausnahme der ersten Mischstufe, wird zusätzlich frisches Kohlendioxid seitlich eingepumpt, was zu einer besseren Löslichkeit des Produkts, also ebenfalls zu der angestrebten Verbesserung des Wirkungsgrades, führt. Durch die Mischelemente des Mischers wird insgesamt ein homogenes Feld von Geschwindigkeitsdifferenzen erzeugt und durch die dauernde Wiedervereinigung der Teilströme wird die Gelegenheit zu Tropfenverbindungen gegeben. Es ergibt sich insgesamt ein verhältnismäßig enges Spektrum von Tropfengrößen im erfindungsgemäßen Hochdruckmischer.

Durch die angestrebten hohen Druckverluste und hohen Geschwindigkeiten ergibt sich insgesamt hohe kinetische Energie, die wiederum die Aufenthaltszeiten im Mischer stark verkürzt.

Für den erwähnten Druckverlust im Mischer werden Werte von bis etwa 100 bar bevorzugt und die Strömungsgeschwindigkeit im Hochdruckmischer sollte bis etwa 10 m/Sek. betragen. Dies sind gegenüber bekannten Mischern fühlbar erhöhte Werte, die mit Drücken von lediglich einigen bar und Geschwindigkeiten im Bereich bis etwa 0,5 m/Sek. arbeiten.

Um einen kontinuierlichen Betrieb der Anlage sicherzustellen, wird der Ausgang des Hochdruckseparators für das Raffinat mit einer Schleuse versehen.

Das Raffinat kann über die Schleuse chargenweise aus dem Hochdruckseparator abgezogen werden, ohne daß der kontinuierliche Betrieb der Gesamtanlage hierfür unterbrochen werden muß.

Eine praktische Ausführungsform dieser Schleuse ist dadurch gekennzeichnet, daß diese eine Füllstrecke aufweist, die über gesteuerte Ventile eingangsseitig und ausgangsseitig gesperrt werden kann. Man öffnet also das eingangsseitige Ventil bei geschlossenem ausgangsseitigem Ventil und füllt die Schleuse mit dem aus dem Separator abgezogenen Raffinat. Anschließend schließt man das eingangsseitige Ventil und zieht das in der Schleuse enthaltene Raffinat durch Öffnen des ausgangsseitigen Ventils ab.

Reinlecithin ist leichter als die Bestandteile des übrigen Gemisches im Hochdruckseparator. Im Gegensatz zur Lehre der eingangs erwähnten Offenlegungsschrift wird es daher bevorzugt, wenn der Ausgang für das Raffinat an der Oberseite des Hochdruckseparators vorgesehen ist, sofern das Raffinat leichter ist als das übrige Gemisch im Separator, wie dies beim Abtrennen von Reinlecithin aus dem Separator der Fall ist.

Eine wichtige Ausgestaltung der Erfindung ist dadurch gekennzeichnet, daß in einen im Hochdruckseparator vorgesehenen Sammelraum für das Raffinat eine Leitung für die Zufuhr des Lösungsmittels einmündet. Das über diese Leitung zugeführte frische Lösungsmittel wäscht hier das Raffinat und reinigt es dadurch. Je nachdem, ob sich der Sammelraum für das Raffinat oben oder unten im Separator befindet, mündet die Leitung für das frische Lösemittel oben oder unten in den Separator ein, ggfs. auch an beiden Stellen, so daß dieselbe Anlage benutzt werden kann, wenn sich der Sammelraum oben oder unten befindet.

Die Mischung wird in den Separator über einen Sprühkopf eingegeben, der vorzugsweise den gesamten Querschnitt des Separators einnimmt oder doch einen wesentlichen Teil davon. Auch dadurch wird der angestrebte gute Wirkungsgrad der Gesamtanlage erreicht.

Am Ausgang des Hochdruckseparators für das Gemisch aus dem Extrakt und dem Lösemittel ist vorzugsweise ein Filter vorgesehen. Das Filter reinigt dieses Gemisch von Verunreinigungen. Seine Porengröße ist vorzugsweise einstellbar, um den unterschiedlichen Gegebenheiten Rechnung zu tragen.

Das Lösemittel verdampft im Trennbehälter und das Extrakt wird aus dem Boden des Trennbehälters abgezogen. Das verdampfte Lösemittel kann man für den Prozeß wiedergewinnen und zu diesem Zweck ist an den Ausgang des Trennbehälters ein Verflüssiger angeschlossen, der das Lösemittel verflüssigt und über eine Rückführleitung wird das verflüssigte Lösemittel in den Kreislauf wieder zurückgeführt.

Zum Füllen des Kreislaufs mit dem Lösemittel und auch als Ersatz für verlorengegangenes Lösemittel mündet in den Verflüssiger eine Leitung zur gesteuerten Zufuhr des Lösemittels aus einem Vorratsbehälter ein.

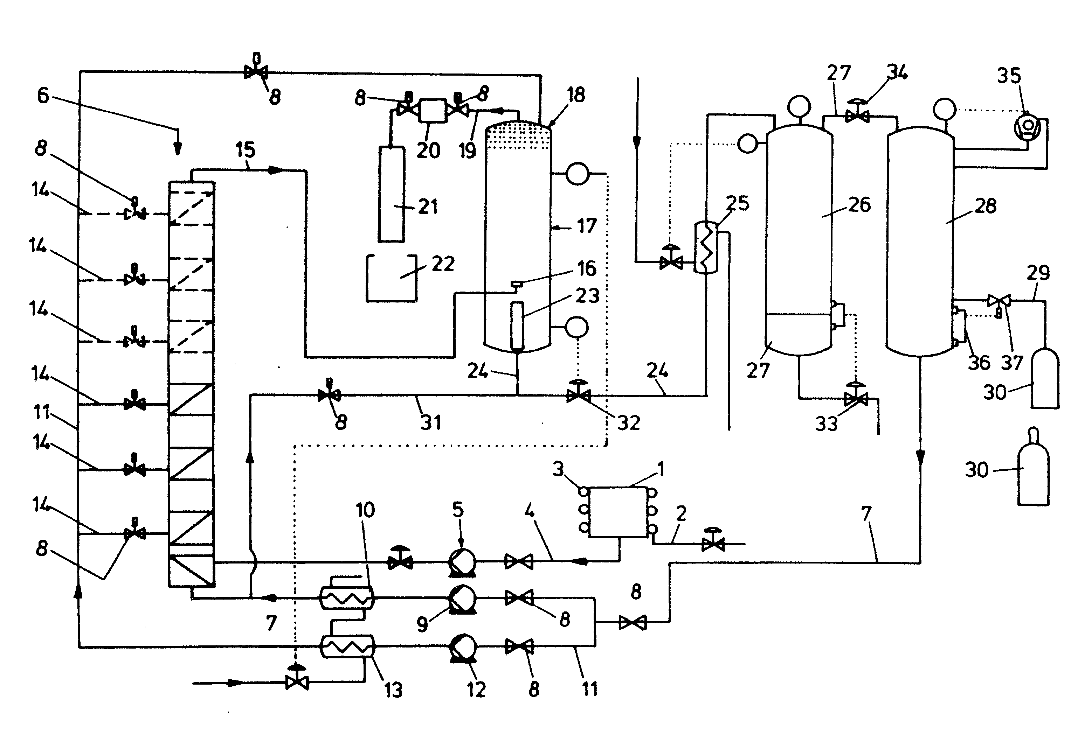

Die Erfindung wird im folgenden anhand eines Ausführungsbeispiels näher erläutert, aus dem sich weitere wichtige Merkmale ergeben. Die Figur zeigt schematisch eine erfindungsgemäße Anlage, wobei bezüglich der einzelnen Verfahrensparameter - insbesondere Drücke und Temperaturen -als Beispiel die Gewinnung von Reinlecithin aus Rohlecithin erläutert wird.

Rohlecithin als Ausgangssubstanz befindet sich in einem Behälter 1, der über eine Leitung 2 und einen Wärmetauscher 3 erwärmt werden kann. Beispielsweise wird das Rohlecithin mittels Heißwasser auf eine Temperatur zwischen ca. 65 und 90 °C erwärmt.

Die Temperatur und der Druck im Behälter 1 können gesondert gesteuert bzw. überwacht werden.

Das Rohlecithin gelangt aus dem Behälter 1 über eine Leitung 4 und eine Hochdruckpumpe 5 mit Sperrventilen in den Eingang eines Hochdruckmischers 6. Dort mischt sich das Rohlecithin mit überkritischem $CO_2$. Dieses wird dem Mischer 6 über eine Leitung 7 mit bei Position 8 angedeuteten Ventilen, eine Hochdruckpumpe 9 und einen Wärmetauscher 10 zugeführt.

Von der Leitung 7 zweigt eine Zweigleitung 11 ab, die einen Teil des hinter einer weiteren Hochdruckpumpe 12 in überkritischem Zustand befindlichen $CO_2$ über einen weiteren Wärmetauscher 13 ebenfalls dem Mischer 6 zuführt, wobei die Zufuhr des überkritischen $CO_2$ über die Zweigleitung 11 aber zu den weiteren Stufen des Mischers 6 erfolgt, nämlich über Zweigleitungen 14, die über Ventile 8 jeweils an eine der hintereinander befindlichen Stufen des Mischers 6 angeschlossen sind.

Das Gemisch bzw. das Extrakt und das Raffinat verlassen den Mischer 6 über eine Leitung 15 und gelangen über einen Sprühkopf 16 in einen Hochdruckseparator 17. Hier schwimmt das bei Position 18 angedeutete Reinlecithin als Raffinat auf dem Gemisch auf und wird über eine Leitung 19 abgezogen. Die Leitung 19 führt zu einer Schleuse 20 mit eingangs- und ausgangsseitig vorgesehenen Ventilen 8 und von dort über eine Entspannungsstrecke 21 zu einem Auffangbehälter 22 für das Raffinat (Reinlecithin).

Im Boden des Separators 17 ist vor einem Auslaß für das restliche Gemisch ein Filter 23 vorgesehen. Das gefilterte restliche Gemisch verläßt den Separator 17 über eine Leitung 24 und gelangt über einen Wärmetauscher 25 in einen Trennbehälter 26. Am Boden des Trennbehälters setzt sich das Extrakt ab, im vorliegenden Fall bei Position 27 angedeutetes Öl. Überschüssiges $CO_2$ und durch die Entspannung freigesetztes, gasförmiges $CO_2$ wird aus der Oberseite des Behälters 26 über eine Leitung 27 in einen Kondensator 28 abgegeben, wo es wieder verflüssigt wird.

An den Kondensator ist über eine gesteuerte Leitung 29 ein Vorratsbehälter 30 für $CO_2$ angeschlossen.

Der Ausgang des Kondensators 28 ist an die Leitung 7 angeschlossen, wodurch der Kreislauf für das $CO_2$ geschlossen ist.

Zwischen der Leitung 7 und der Unterseite des Separators 17 ist eine über ein Ventil 8 gesteuerte Zweigleitung 31 vorgesehen, über die frisches $CO_2$ wahlweise von der Unterseite her in den Separator 17 eingegeben werden kann, wenn sich nämlich dort das Raffinat befindet, und nicht wie zeichnerisch dargestellt an der Oberseite des Separators 17.

Im folgenden sollen weitere Verfahrensparameter angegeben werden, die anhand einer Pilotanlage gewonnen wurden. Verflüssigtes $CO_2$ aus dem Behälter 28 steht unter einem Druck von 50 bar und fließt bei einer Temperatur von 15° C zur Saugseite der Dosierpumpen 9 und 12. Die Dosierpumpe 9 hat eine Leistung von 200 l/Std. und liefert eine Druckerhöhung auf 500 bar. Die Dosierpumpe 12 hat eine Leistung von 100 l/Std. und sie liefert ebenfalls eine Druckerhöhung auf 500 bar.

Die Pumpen drücken das $CO_2$ also von 50 bar auf 400 bis 500 bar und in die Wärmetauscher 10, 13, wo das $CO_2$ bis auf 70° C aufgewärmt werden kann.

Die Dosierpumpe 5 hat eine Leistung von etwa 20 l/Std. bei 500 bar. Sie pumpt die Ausgangssubstanz in die Extraktionsstrecke. An der Saugseite der Pumpe kann die Ausgangssubstanz (Rohlecithin) im Behälter 1 bis auf 70° C aufgewärmt werden. Das Rohprodukt wird dann auf der Druckseite der Pumpe 5 mit einem Druck bis 500 bar in die Extraktionsstrecke eingepumpt. Hier findet eine kontinuierliche Dispersion der Medien statt, die zwei oder mehr ineinander lösliche oder unlösliche Komponenten miteinander in Kontakt bringt. Die dadurch erzeugte große Grenzfläche zwischen den Phasen beschleunigt den Stoffaustausch.

Das $CO_2$ fließt über die Leitung 7 senkrecht nach oben in die Extraktionsstrecke des Mischers 6 und das Produkt wird über die Leitung 4 seitlich eingeimpft. In dieser Strecke ohne sich bewegende Teile findet die erste Stufe der Mischung der Phasen statt. Die Tropfengröße liegt hier um 100 μm. Die Mischung ist sehr homogen in der Tröpfchengröße und hat also ein enges Verweilspektrum.

Hinter der ersten Dispersionsstufe folgt eine Beruhigungsstrecke und anschließend trifft die Dispersion eine Reihe von statischen Mischelementen, die durch ihre Geometrie eine weitere Aufteilung der Tröpfchengröße erzielen. Die Dispersion wird also feiner und beschleunigt noch mehr den Stoffaustausch. Den statischen Mischer in den einzelnen Stufen kann man sich nach Art von spiralig gewundenen Prallplatten vorstellen.

In diesen weiteren Stufen wird seitlich gleichzeitig frisches $CO_2$ eingepumpt, das zur einer besseren Löslichkeit des Produkts und also zu einem größeren Wirkungsgrad führt. Durch die Mischelemente wird ein homogenes Feld von Geschwindigkeitsdifferenzen erzeugt und durch die dauernde Wiedervereinigung der Teilströme Gelegenheit zur Tropfenverbindung gegeben. Es ergibt sich also eir enges Spektrum von Tröpfchengrößen.

Die Mischung von $CO_2$, dem Extrakt und dem Raffinat gelangt dann in den Behälter 17, wo die Phasen sich trennen und je nach spezifischem Gewicht von oben oder von unten abgezogen werden.

Im Gegenstrom zu dem auszuführenden Raffinat wird über die Leitung 11 oder 31 im Gegenstrom mit dem Raffinat eine Spülung mit frischem $CO_2$ vorgenommen und über die Schleuse 20 wird das Raffinat abgezogen. Die Schleuse erlaubt es, das Produkt abzuziehen, ohne den Druck im Separator 17 zu beeinflussen.

Das Extrakt, ggfs. mit $CO_2$, wird über das Filter 23 und die Leitung 24 weitergeleitet, wobei das Filter vorzugsweise aus Ultrafiltrationsmembranen aus einer Edelstahlmatrix besteht. Es hat spiralförmig verlaufende Poren, die trichterförmig angeordnet sind. Indem die Spirale mehr oder weniger angezogen wird, ändert sich die Porosität des Moduls, und zwar vorzugsweise zwischen 0,5 und 20 μm.

Das Filter 23 wird über das gleiche Medium $CO_2$ über die Leitung 31 rückgespült, um es von Verstopfungen zu befreien.

Die Mischung wird über ein gesteuertes Ventil 32 auf einen Druck von ca. 60 bar gebracht und über den Wärmetauscher 25 auf eine Temperatur von etwa 30°C. Sie gelangt dann in den Trennbehälter 26. Im Trennbehälter trennt sich das $CO_2$ vom Extrakt ab und das $CO_2$ vergast in diesem Zustand.

Das abgetrennte Öl (Extrakt) sammelt sich am Boden des Behälters und wird über eine Niveauregelung und ein Mikroflußventil 33 abgeführt.

Das vergaste $CO_2$ gelangt über ein Mikroflußventil 34 in den Behälter 28, wo es durch eine Kältemaschine 35 verflüssigt wird. Vom Behälter 28 erreicht das verflüssigte $CO_2$ bei einem Druck von ca. 50 bar und einer Temperatur von 15°C wieder die Saugseite der Dosierpumpen 9, 12 und der Zyklus fängt wieder an.

Über einen Niveaumesser 36 und ein Ventil 37 wird durch den Prozeß verlorenes $CO_2$ im On-/Off-Verfahren wieder in den Kreislauf eingeschleust.

Die gesamte Steuerung erfolgt über geeignete Fühler und einen Mikrocomputer.

Kohlendioxid als Lösemittel wird bevorzugt, weil es lebensmittelrechtlich unbedenklich ist. Es können aber auch andere Lösemittel Verwendung finden, sofern sie sich für das Hochdruck-Extraktionsverfahren eignen, natürlich jeweils bezogen auf die betreffende Ausgangssubstanz, die zu extrahieren ist. Beispiele für derartige Lösemittel sind Wasser, Ammoniak, Schwefelfluorid, Äthan, Äthanol, Propan, Toluen, Trichlorfluormethan, Methanol, Isopropanol, n-Propan, n-Butan, n-Pentan, n-Hexan, 2,3-Dimethylbutan, Benzol, Dichlorodilfluorometan, Trichlorofluoromethan, 1,2-Dichlorotetrafluoroäthan, $NO_x$, Diethyläther, Äthylmethyläther.

Diese Lösemittel können allein oder miteinander gemischt eingesetzt werden.

Beim Beispiel des Gewinnens von Reinlecithin aus Rohlecithin ist es wichtig, daß das Reinlecithin pulverförmig anfällt und über die Schleuse abgezogen wird. Das Filter 23 hält also die pulverförmigen Anteile zurück. Dies ist wichtig, weil ein Öl mit mehr als 0,5% Lecithinanteil von den Ölwerken nicht akzeptiert wird und dieser Lecithinanteil wird mittels des Filters sicher unterschritten. Wichtig ist es bei diesem Beispiel auch, daß ein Erwärmen des Rohlecithins im Behälter 1 auf ca. 60°C ausreicht, auch wenn sich das Rohlecithin im Behälter und das Schutzgas ($CO_2$) befindet. Beim eingangs geschilderten Stand der Technik muß dagegen das Rohlecithin auf 90°C eingangsseitig aufgewärmt werden, worunter natürlich die Qualität des Rohlecithins leidet. Beim erfindungsgemäßen Verfahren hat das Öl nach der Extraktion eine Konzentration an Lecithin von lediglich ca. 0,02%.

Im folgenden werden weitere Beispiele für die Trennung einer Ausgangssubstanz in ein Raffinat und in ein Extrakt mittels der erfindungsgemäßen Anlage gegeben.

Bei der Herstellung von Antibiotika entstehen Lösungen, die aus Chloroform und den Antibiotika bestehen. Bei der normalen Anfertigung der Antibiotika wird die Lösung unter Vakuum auskristallisiert. Dabei entstehen Antibiotikakristalle, die nicht nur mit Chloroformspuren außerhalb der Kristalle belegt sind, sondern das Chloroform ist in die Antibiotikakristalle eingekapselt.

Wir diese Lösung, anstatt sie unter Vakuum auszukristallisieren, in die Reaktionsstrecke 6 der erfindungsgemäßen Anlage gepumpt, dann wird quasi simultan das Chloroform vollständig vom $CO_2$ aufgenommen und hat nicht die Zeit, sich in die Kristalle der Antibiotika einzufügen. Das Antibiotikum wird dann im Behälter 17 von $CO_2$ und Chloroform getrennt und abgeführt. $CO_2$ und Chloroform werden im Behälter 26 getrennt und getrennt wieder in den Zyklus eingeführt.

Die gleiche Verfahrensführung kann für die Produktion von Steroiden erfolgen, die in Äthanol und Dichloräthan gelöst sind.

Als weiteres Beispiel wird die Extraktion von Paraffinen aus Sulphonat-Schwefelsäure genannt. Derzeit wird diese Extraktion mit $CO_2$ vorgenommen, aber in einer Extraktionssäule. Durch die Anwendung der Extraktionsstrecke (Mischer 6) kann die Extraktionssäule auf einen einfachen Trennbehälter reduziert werden.

Mit der erfindungsgemäßen Anlage sind somit alle Extraktionen von flüssigen Mischungen möglich, deren Komponenten in $CO_2$ oder in einem anderen geeigneten Lösemittel löslich sind. Sie können durch den Mischer 6 in kurzer Zeit und ohne die Anwendung von Trennkolonnen in ihren Bestandteilen extrahiert und getrennt werden.

## Ansprüche

1. Vorrichtung zum kontinuierlichen Trennen einer Ausgangssubstanz (1) in ein Raffinat (18) und in ein Extrakt (27) mit Hilfe eines Hochdruck-Extraktionsverfahrens, wobei die Ausgangssubstanz in einen Hochdruckmischer (6) geleitet wird, in dem sie mit einem in überkritischem Zustand befindlichen Lösemittel in innigen Kontakt gebracht wird und gemischt wird derart, daß eine Mischung aus dem Raffinat, dem Extrakt und ggf. aus überschüssigem Lösemittel in einen dem Mischer (6) nachgeschalteten Hochdruck-Separator (17) geleitet wird, in dem das Raffinat aus dem Gemisch abgetrennt und gewonnen wird und aus dem das restliche Gemisch in einen Trennbehälter (26) geleitet wird, in dem es in das Extrakt und das Lösemittel getrennt wird und aus dem das Extrakt und das Lösemittel gewonnen werden,

**dadurch gekennzeichnet,**

daß der Hochdruckmischer (6) als statischer Mischer ausgebildet und so ausgelegt ist, daß er die ihm zugeführten Bestandteile mit hohem Druckverlust und bei im wesentlichen laminarer Strömung mischt, wobei der Mischer in der Durchströmungsrichtung der Ausgangssubstanz hintereinander mehrere Mischstufen aufweist, in denen das Gemisch in immer feinere Tröpfchen zerteilt und mit dem Lösemittel nach Art einer Dispersion gemischt wird, wobei das frische Lösemittel zumindest einigen der Stufen des Mischers über getrennte Leitungen zugeführt wird.

2. Vorrichtung nach Anspruch 1,

**dadurch gekennzeichnet,**

daß der Ausgang des Hochdruckseparators (17) für das Raffinat mit einer Schleuse (20) versehen ist.

3. Vorrichtung nach Anspruch 2,

**dadurch gekennzeichnet,**

daß die Schleuse (20) eine Füllstrecke aufweist, die über gesteuerte Ventile (8, 8) eingangs- und ausgangsseitig gesperrt werden kann.

4. Vorrichtung nach einem der Ansprüche 1 bis 3,

**dadurch gekennzeichnet,**

daß in einen im Hochdruckseparator (17) vorgesehenen Sammelraum (18) für das Raffinat eine Leitung (11, 31) für die Zufuhr des Lösungsmittels einmündet.

5. Vorrichtung nach einem der Ansprüche 1 bis 4,

**dadurch gekennzeichnet,**

daß am Ausgang des Hochdruckseparators (17) für das Gemisch aus dem Extrakt und dem Lösemittel ein Filter (23) vorgesehen ist.

6. Vorrichtung nach Anspruch 5,

**dadurch gekennzeichnet,**

daß die Porengröße des Filters (23) einstellbar ist.

7. Verfahren zum kontinuierlichen Trennen einer Ausgangssubstanz (1) in ein Raffinat (18) und in ein Extrakt (27) mit Hilfe eines Hochdruck-Extraktionsverfahrens, wobei die Ausgangssubstanz in einen Hochdruckmischer (6) geleitet wird, in dem sie mit einem in überkritischen Zustand befindlicher Lösemittel in innigen Kontakt gebracht wird und gemischt wird derart, daß eine Mischung aus dem Raffinat, dem Extrakt und ggf. aus überschüssigem Lösemittel in einen dem Mischer (6) nachgeschalteten Hochdruck-Separator (17) geleitet wird, in dem das Raffinat aus dem Gemisch abgetrennt und gewonnen wird und aus dem das restliche Gemisch in einen Trennbehälter (26) geleitet wird, in dem es in das Extrakt und das Lösemittel getrennt wird und aus dem das Extrakt und das Lösemittel gewonnen werden,

**dadurch gekennzeichnet,**

daß der Hochdruckmischer (6) als statischer Mischer ausgebildet und so ausgelegt ist, daß er die ihm zugeführten Bestandteile mit hohem Druckverlust und bei im wesentlichen laminarer Strömung mischt, wobei der Mischer in der Durchströmungsrichtung der Ausgangssubstanz hintereinander mehrere Mischstufen aufweist, in denen das Gemisch in immer feinere Tröpfchen zerteilt und mit dem Lösemittel nach Art einer Dispersion gemischt wird, wobei das frische Lösemittel zumindest einigen der Stufen des Mischers über getrennte Leitungen zugeführt wird.

8. Verfahren nach Anspruch 7,

**dadurch gekennzeichnet,**

daß der Druckverlust im Hochdruckmischer (6) bis etwa 100 bar beträgt.

9. Verfahren nach Anspruch 7 oder 8,

**dadurch gekennzeichnet,**

daß die Strömungsgeschwindigkeit im Hochdruckmischer (6) bis etwa 10 bis 20 m/s beträgt.

**Europäisches Patentamt**

# EUROPÄISCHER RECHERCHENBERICHT

Nummer der Anmeldung

## EP 90 11 8095

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 548 711 (D.M. COOMBS)<br>* Spalte 3, Zeilen 13-68; Spalten 4-5; Spalte 1, Zeilen 43-47 *<br>– – – | 1,7 | B 01<br>D 11/04 |
| A,P | DE-A-3 813 636 (H. BENEKE)<br>* Spalten 1-5 *<br>– – – | 1,4,7 | |
| A | US-A-2 658 907 (G.H. PALMER)<br>* Spalten 1-28 *<br>– – – | 1,7 | |
| A | GB-A-1 057 911 (STUDIENGESELLSCHAFT KOHLE)<br>– – – – – | | |

|  | RECHERCHIERTE SACHGEBIETE (Int. Cl.5) |
|---|---|
|  | B 01 D |

Der vorliegende Recherchenbericht wurde für alle Patentansprüche erstellt

| Recherchenort | Abschlußdatum der Recherche | Prüfer |
|---|---|---|
| Den Haag | 13 Dezember 90 | DE PAEPE P.F.J. |